# EUROPEAN PATENT APPLICATION

(11) **EP 4 495 217 A1**
(43) Date of publication of application: **22.01.2025**
(21) Application number: 23187046.0
(22) Date of filing: 21.07.2023
(51) Int. Cl.: C12C 7/20, C12C 7/22, C12C 12/00, C12C 13/02, C12C 13/08

(54) **METHOD FOR TREATING WORT IN A KETTLE**

(71) Applicant: Anheuser-Busch InBev S.A., 1000 Brussels (BE)
(72) Inventor: SALAS, Ernesto, 3000 Leuven (BE); ADAM, Pierre, 3000 Leuven (BE)
(74) Representative: Marks & Clerk LLP

(57) **Abstract**

The present invention further relates to a method for treating wort in a kettle, said method comprising the steps of: (a) providing: a kettle (1) provided with an inlet (1u) suitable for feeding wort into the kettle (1) and with an outlet (1d) suitable for flowing wort out of the kettle (1), heating means (2) suitable for bringing the wort contained in the kettle (1) close to or at boiling temperature as well as for controlling said temperature, a gas sparging system (3) suitable for sparging a gas into the wort contained in the kettle (1), and a holding tank (9); (b) dividing a wort stream from a lautering step into two sub-streams, the first sub-stream being 50 to 75 % by volume and the second sub-stream being 50 to 25 % by volume relating to the total volume of the initial wort stream; (c) feeding wort from the first sub-stream into the kettle (1) through the inlet (1u), said wort being at a temperature below its boiling temperature Tb; (d) while sparging a gas through the wort contained in the kettle (1), heating said wort to and maintaining it at a treatment temperature Ta, which is below the boiling temperature Tb of the wort, for a treatment time t; (e) feeding wort from the second sub-stream into the holding tank (9); (f) transferring the treated wort through the outlet (1d) of the kettle (1) and combining it with wort from the holding tank (9), or transferring wort from the holding tank (9) in the kettle (1) and combining it with the treated wort contained in the kettle (1). The present invention further relates to a system for treating wort and to beer or a malt based beverage produced from wort treated by the inventive method.

## Description

### Technical Field

The present invention relates to an improvement of conventional wort boiling techniques in beer brewing processes. In particular, it concerns a process which is substantially more economical in terms of energy consumption than hitherto achieved.

### Background of the invention

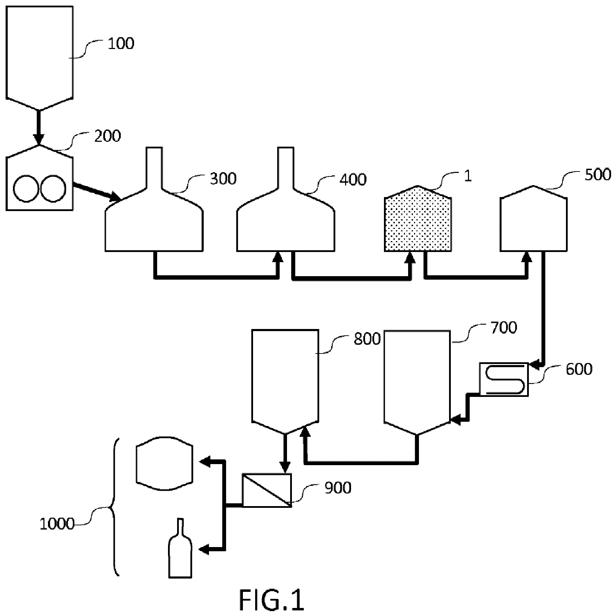

As shown in Figure 1, brewing a beer or a malt based beverage comprises feeding malt (100) to a grinder (200), which is then mixed with water and mashed (300) at a moderately high temperature to stop enzymatic conversion of starches into fermentable sugars. In the lautering step (400), the mash is separated into the clear liquid wort and the residual grain. The thus separated wort is then fed to a kettle (1) in a step traditionally referred to as "boiling" step, because the wort is conventionally heated above its boiling temperature to sterilize it, terminate enzymatic activity, and convert and/or remove undesired components. After the boiling step, trub, which has formed during the boiling step, is separated from the wort usually in a whirlpool tun (500), as for example disclosed in DE10 2008 033 287. Wort is then cooled (600), fermented (700), matured (800), filtered (900) and packaged (1000), e. g. in bottles, kegs, cans, and the like.

The breweries in the globalizing world face numerous challenges, including the ever-increasing energy prices and complicated transportation due to exportation. The increased exportation forces breweries to search for technological changes that improve the colloidal, microbial and flavour stability. Flavour stability is today not yet fully understood. It is known, however, that of all steps of the entire brewing process, as shown for example in Figure 1, it is the wort boiling step that has a major impact on beer flavour stability.

Wort boiling is one of the most energy-consuming process steps in the brewery. It serves several functions:
(a) wort sterilization,
(b) termination of enzymatic activity,
(c) isomerization of alpha acids into iso-alpha acids,
(d) coagulation of proteins and polyphenols,
(e) breakdown of S-methyl methionine (SMM) into dimethyl sulphide (DMS), and
(f) removal of unwanted flavour compounds.

Wort sterilization and termination of enzymatic activity are easily achieved when reaching temperatures of more than 90 °C. The isomerization rate of hop acids is temperature dependent, roughly doubling every 10 °C. Denaturation of enzymes and haze-active proteins with subsequent coagulation and precipitation with polyphenols must be completed during the wort boiling process. The coagulation process is dramatically enhanced when the interface between liquid and gas is enlarged. When wort reaches the boiling temperature, vapour bubbles provide this extra interface.

Breakdown of S-methyl methionine (SMM) to dimethyl sulphide (DMS), which is very volatile, is a necessary step prior to the evacuation of DMS. The most energy-consuming requirement is the removal of unwanted flavour compounds, in particular DMS, but also other flavour compounds. Every volatile is determined by the vapour-liquid-equilibrium (VLE) of the component and wort, the latter being considered physically as almost identical to pure water. This means that a determined amount of evaporation is needed to reduce the level of an undesired compound to sub-threshold levels. There is therefore always a minimum evaporation required and most recent systems operate with a minimum of 4-6 wt.% evaporation during the boiling process.

Several wort boiling techniques are known in the art. For example, since the 1970's, a commonly applied boiling method is boiling with natural convection by means of an internal boiler. The internal boiler is cylindrically shaped formed by a bundle of hollow heated tubes, and wort can freely flow through these tubes. The working principle is of the 'thermosiphon' type, whereby wort enters the heating tubes, reaches boiling temperature and vapour bubbles will form and arise. These vapour bubbles (very low density) are the driving force upward through the internal boiler, thereby ensuring a natural convection. Alternatively, the boiler can be located outside the kettle and wort is fed there through by means of a pump and returned into the kettle.

In the last decade numerous new boiling systems have been introduced. They all focus on energy reduction by decreased evaporation and by reduction of thermal load measured on wort by the thiobarbituric acid (TBA) number method. Examples of modern wort boiling systems are based on: dynamic wort boiling, thin-film evaporation, external thermosiphon boiler with increased heating surface, continuous wort boiling, vacuum boiling, internal boiler with forced convection, gentle boiling with flash evaporation, and wort boiling with inert gas sparging. In particular, wort boiling with inert gas sparging comprises boiling wort for a time of about 30 min at which point, while still boiling, an inert gas is sparged into the boiling wort, which considerably enhances the removal rate of DMS. The sparging is provided by a ring-structure located at the bottom of the wort kettle, such as disclosed in EP 0 875 560. Owing to the facilitated DMS removal, the boiling time can be shortened and evaporation rates can be reduced to about 4 wt.%. EP 2 871 227 describes a "pseudo-boiling" process because, contrary to the processes described in EP 0 875 560 and DE 10 2008 033 287, wort is kept below its boiling temperature at any moment during the boiling time. According to EP 2 871 227, the entire wort stream coming from a lautering step is subjected to a pseudo-boiling process. EP 2 871 227 does not disclose fractional boiling.

Even with the latest wort boiling techniques, wort boiling remains the most energy-consuming step of the whole brewing process. There therefore remains in the art a clear need for a more economical boiling process of wort issued from a lauter tun. The present invention proposes such process.

### Summary of the invention

The present invention is defined in the appended independent claims. Preferred aspects of the invention are defined in the dependent claims. In particular, the present invention concerns a method for treating wort in a kettle, said method comprising the steps of:
(a) providing:
   - a kettle (1) provided with an inlet (1u) suitable for feeding wort into the kettle (1) and with an outlet (1d) suitable for flowing wort out of the kettle (1),
   - heating means (2) suitable for bringing the wort contained in the kettle (1) close to or at boiling temperature as well as for controlling said temperature,
   - a gas sparging system (3) suitable for sparging a gas into the wort contained in the kettle (1), and
   - a holding tank (9);
(b) dividing a wort stream from a lautering step into two sub-streams, the first sub-stream being 50 to 75 % by volume and the second sub-stream being 50 to 25 % by volume relating to the total volume of the initial wort stream;
(c) feeding wort from the first sub-stream into the kettle (1) through the inlet (1u), said wort being at a temperature below its boiling temperature Tb;
(d) while sparging a gas through the wort contained in the kettle (1), heating said wort to and maintaining it at a treatment temperature Ta, which is below the boiling temperature Tb of the wort, for a treatment time t;
(e) feeding wort from the second sub-stream into the holding tank (9);
(f) transferring the treated wort through the outlet (1d) of the kettle (1) and combining it with wort from the holding tank (9), or transferring wort from the holding tank (9) in the kettle (1) and combining it with the treated wort contained in the kettle (1).

Preferably, step (a) further comprises providing a buffer tank (7). When a buffer tank (7) is provided, step (c) further comprises feeding wort from the first sub-stream into the buffer tank (7) and feeding wort from the buffer tank (7) into the kettle (1).

The treatment temperature Ta is preferably greater than 90°C, more preferably greater than 93°C, even more preferably greater than 96°C, and most preferably between (Tb-2°C) and Tb, wherein Tb is the boiling temperature of the wort. It is preferred that even after the treatment time t, the wort never reaches the boiling temperature Tb thereof during the whole treatment time t of its residence in said kettle. Accordingly, the treatment time t is preferably comprised between 15 and 90 min, more preferably between 20 and 75 min, even more preferably between 30 and 60 min, and most preferably no longer than required to evaporate at most 4 wt.% of water initially present in the wort.

The process of the present invention can be carried out in prior art kettles used for conventional boiling of wort, to which a gas sparging system is added. In particular, the kettle can be of the internal boiler type, comprising vertically oriented heating tubes through which flows the wort to be heated or to be maintained at elevated temperature. It is advantageous if said heating tubes are located directly above the gas sparger. Alternatively, the kettle can be of the external boiler type, comprising heating tubes through which flows the wort to be heated or to be maintained at elevated temperature, said heating tubes being located outside the kettle and in fluid communication therewith through tubing and a pump.

The gas can be sparged into the wort by means of a gas sparger located at the bottom of the kettle and oriented upwards or sideways in the radial direction, said sparger preferably comprising a circular plate, cylindrical or ring provided with a multitude of apertures. The apertures can be orifices or open pores of a sintered material, such as sintered stainless steel. In order to homogenize the temperature of the wort during the heating up stage, it is preferred that the gas sparging flow rate has an initial value, which is highest upon introduction of the wort in the kettle (1), comprised between and comprised between 0.05 and 50 m³/h/hl wort, more preferably between 0.1 and 10 m³/h/hl wort. As the treatment temperature Ta is reached, the gas flow rate may be decreased progressively to a value preferably comprised between 25 and 75%, more preferably between 37 and 45%, of the initial value of the gas sparging flow rate. The gas is preferably an inert gas, such as nitrogen or carbon dioxide, or a mixture of gases, such as air.

At the end of the process, the thus treated wort can be transferred to a trub separation step, for example in a whirlpool tun, and then to further treatment vessels to produce a beer or a malt based beverage. The beer or malt based beverage thus produced preferably has one or more of the following properties:
(a) foam stability (NIBEM) of at least 150 s;
(b) haze measured on fresh beer or malt based beverage lower than 1.0 EBC; and/or
(c) haze measured on beer or malt based beverage aged for 3 days at 60°C lower than 1.5 EBC.

The present invention also relates to a system for treating wort comprising:
- means suitable for dividing a wort stream from a lautering step into two sub-streams, the first sub-stream being 50 to 75 % by volume and the second sub-stream being 50 to 25 % by volume relating to the total volume of the wort stream;
- a holding tank (9) configured to receive wort from the second sub-stream and to transfer wort into the kettle (1);
- a kettle (1) provided with an inlet (1u) configured to receive wort from the first sub-stream and with an outlet (1d) configured to flow wort out of the kettle (1) and combining it with wort from the holding tank (9);
- heating means (2) configured to bring the wort contained in the kettle (1) close to or at boiling temperature as well as to control said temperature;
- a gas sparging system (3) configured to sparge gas into the wort contained in the kettle (1); and
- optionally a buffer tank (7) configured to receive wort from the first sub-stream and to transfer wort into the kettle (1).

### Brief description of the Figures

For a better understanding of the nature of the present invention, reference is made to the following detailed description taken in conjunction with the accompanying drawings in which:
**Figure 1** shows the various steps of a brewing process known in the prior art.

### Detailed description of the invention

The present invention addresses the wort boiling step, which is part of a brewing process as shown e. g. in Figure 1. The wort boiling step follows lautering (400) and precedes trub separation (500), such as is most often performed in a whirlpool tun. It is clear that a buffer tank or pre-heating tank can be interposed between a lautering tun and the kettle (1) without changing anything to the present invention. The wort treatment step, which is the subject of the present invention is traditionally referred to as a "boiling" step because the wort is traditionally heated above its boiling temperature to sterilize it, terminate enzymatic activity, and convert and/or remove undesired components. In the present process, however, the term "pseudo-boiling" step is used instead because, contrary to the traditional boiling steps, wort is not brought to its boiling temperature at any moment during the treatment time t.

The pseudo-boiling process of the present invention is meant to replace advantageously the boiling processes disclosed and used to date in the art, with a concomitant substantial reduction of the energy consumption. In particular, after both a boiling and a pseudo boiling step:
(a) the wort must be sterilized,
(b) the enzymatic activity must be terminated,
(c) the amount of alpha acids shall be reduced and replaced by iso-alpha-acids,
(d) a substantial amount of S-methyl methionine (SMM) must have been transformed into dimethyl sulphide (DMS),
(e) haze active proteins and polyphenols must have been coagulated for separation, and
(f) unwanted flavour compounds, in particular DMS, shall be removed.

The above objectives (a) to (d) are mostly time-temperature dependent and can be achieved at temperatures above 90°C, with a rate increasing with the temperature. Coagulation of proteins and polyphenols and removal of unwanted volatile flavour components, on the other hand, are substantially accelerated when the interfacial area between liquid and gas is increased. For this reason, it is necessary to bring the wort to boiling in order to generate vapour bubbles which substantially increase the liquid-gas interfacial area and enhance the coagulation rate of haze active proteins and polyphenols and the removal rate of undesired volatile components. This method of boiling wort to increase the liquid-gas interfacial area works well, but has two major drawbacks:
(a) it is strongly energy consuming, and
(b) water evaporation ranges from 4 wt.% for the most economical boiling systems to 6-10 wt.% and more for more traditional boiling techniques.

Boiling water is very energy consuming. Physical heat properties of wort are very comparable to those of water. Latent heat of vaporization of water (and wort) is very high: 2260 kJ/kg. It follows that if the heat required to heat 1 litre of wort by a temperature difference dT up to a temperature below the boiling temperature of wort Tb is Q = cp dT kJ/kg, wherein cp is the specific heat of wort (≃4.19 kJ/kg*°C), 2260 kJ/kg are required by the system to turn said 1 litre of liquid into vapour once the temperature of the wort has reached the boiling temperature Tb. Note that since the boiling temperature of wort (and water) is pressure dependent, the actual value of Tb varies as a function of the weather and location of the brewery. At atmospheric pressure, Tb = 100°C, but it is clear that liquid wort will never reach such temperature in a brewery located in Mexico City or in Lhasa.

Removal of unwanted volatile flavour compounds, such as DMS, depends on the vapour-liquid equilibrium (VLE) of each volatile with wort. This means that a determined amount of evaporation is needed to reduce the level of an undesired compound to sub-threshold levels. Therefore, a minimum evaporation is always required and most recent systems operate with a minimum of 4-6% evaporation, which is still a considerable amount.

A system to carry out the process according to the present invention comprises a means suitable for dividing a wort stream from a lautering step into two sub-streams is required, the first sub-stream being 50 to 75 % by volume and the second sub-stream being 50 to 25 % by volume relating to the total volume of the wort stream.

The system of the present invention comprises a kettle (1), which is provided with an inlet (1u) suitable for feeding wort into the kettle and with an outlet (1d) suitable for flowing wort out of the kettle.

The system of the present invention comprises heating means (2) suitable for bringing the wort contained in the kettle (1) close to or at boiling temperature as well as for controlling said temperature. The heating means are generally in the form of a bundle of parallel jacketed hollow tubes, wherein the wort is circulated through the lumen of the hollow tubes, which are heated by a heating fluid circulating in the jackets. The heating means (2) can be located inside the kettle, thus forming an internal boiler kettle. Due to their very low density these vapour bubbles are the driving force upward through the internal boiler, thereby ensuring a natural convection. In some systems of the prior art, a pump is located below the internal boiler to force wort collected at various points of the kettle to flow through the heating pipes. Though applicable, such forced convection system is not mandatory in the present invention because, as will be discussed below, the sparged gas bubbles create already a forced convection. Alternatively, the heating means (2) can be located outside the kettle, fluidly connected thereto by pipes, thus forming an external boiler kettle.

A pump (8) is usually used to force wort flow through the boiler. Most kettles of the prior art traditionally used to carry out a wort boiling step fulfil the foregoing requirements.

The system of the present invention comprises a gas sparging system (3) suitable for sparging a gas into the wort contained in the kettle (1). Although known in the art, such as disclosed in EP 0 875 560, few kettles are provided with a gas sparging system. A gas sparging system can be very simple and may include a circular plate, cylinder or ring provided with a multitude of apertures. The apertures can be through channels, like in a shower head, or they may be the pores of an open pore structure, such as a sintered material (e. g. sintered stainless steel). If an inert gas such as nitrogen is used, a nitrogen converter is very simple and inexpensive to install, and if carbon dioxide is used instead, it is clear that such gas is abundantly available in all breweries. An advantage of the present invention is therefore that it requires no or little modifications to the existing equipment. The gas sparger (3) is preferably located at the bottom of the kettle (1), so that the gas bubbles may rise to the surface of the wort, fixing on their way up volatiles and haze active proteins. In an alternative aspect, an external boiler kettle is provided with a gas sparging system (3) located at the upstream end of the external boiler with respect to the wort flow direction. The bubbles are forced through the hollow heating tubes (2a) and injected into the kettle (1) together with the wort. For kettles (1) of the internal boiler type, it is preferred that the sparger (3) be located below the heating tubes (2a) and preferably have a largest dimension (diameter in case of a disc, cylinder, or a ring) which is smaller than the largest diameter of the boiler (2). With such configuration, the gas bubbles rising through the hollow tubes (2a) of the internal boiler create a forced convection driving wort through the lumens of the hollow tubes of the boiler. This is very advantageous because, on the one hand, no immerged pump is required to create such forced convection and, on the other hand, the flowing rate of the wort through the hollow heating tubes during the heating stage is higher and more homogeneous compared with natural convection systems at temperatures below Tb, when insufficient vapour bubbles are present to create a natural convection with the risk of locally overheating wort.

When a kettle (1) provided with an internal boiler (2) is used, a baffle (5) and a deflector-roof (6) are preferably provided on top of the internal boiler in order to channel the flows of rising gas bubbles and wort, redistribute them over the top liquid-air interface of the wort, and reduce the thickness of the foam thus formed to permit better elimination in the air of the volatiles entrained with the bubbles.

The system of the present invention comprises a holding tank (9) to receive wort from the second sub-stream and to transfer wort into the kettle (1). Optionally, the system of the present invention comprises a buffer tank (7) to receive wort from the first sub-stream and to transfer wort into the kettle (1). When both a buffer tank (7) and a holding tank (9) are used, wort from the buffer tank (7) enters the kettle (1) through inlet (1u), whereas wort from the holding tank (9) is combined with treated wort transferred through the outlet (1u) of the kettle (1), or wort from the holding tank (9) is transferred in the kettle (1) and combined with the treated wort contained in the kettle (1).

According to the process of the present invention, a wort stream coming from a lautering step (400) is divided in two sub-streams. The first sub-stream is 50 to 75 % by volume, preferably 55 to 70 % by volume, more preferably 60 to 65 % by volume, relating to the total volume of the wort stream coming from the lautering step (400). Wort from the first sub-stream may directly be fed into the kettle (1) through the inlet (1u). Preferably, wort from the first sub-stream is fed into the buffer tank (7) or pre-heating tun prior to entering the kettle (1). The temperature of the wort in the buffer tank (7) is generally below 90°C, often between 65 and 85°C.

The second sub-stream is 50 to 25 % by volume, preferably 45 to 30 % by volume, more preferably 40 to 35 % by volume, relating to the total volume of the initial wort stream. The second sub-stream is fed into the holding tank (9), and wort from the holding tank (9) is combined with the treated wort leaving the kettle (1) through the outlet (1d), or wort from the holding tank (9) is transferred in the kettle (1) and combined with the treated wort contained in the kettle (1).

After filling the kettle (1) with wort from the first sub-stream, a gas is sparged into the wort and the latter is concomitantly heated to a treatment temperature Ta, which is lower than the boiling temperature Tb of the wort. When the wort has reached the treatment temperature Ta, it is maintained at said temperature Ta, still under flow of said gas, for a period of time t preferably between 15 and 90 min, more preferably between 20 and 75 min, even more preferably between 30 and 60 min, and most preferably no longer than required to evaporate at most 4 wt.% of water initially present in the wort. As mentioned above, the gas is preferably an inert gas such as nitrogen or carbon dioxide, or a mixture of gases, such as air.

The gas flow rate is highest during the heating period of wort to temperature Ta, and is decreased when the wort is maintained at temperature Ta. The initial gas flow rate is preferably comprised between 0.05 and 50 m³/h/hl wort, more preferably between 0.1 and 10 m³/h/hl. Once the wort has reached its treatment temperature Ta, the gas flow rate can be reduced to a value preferably comprised between 25 and 75%, more preferably between 35 and 50%, most preferred between 37 and 45%, of the initial value of the gas sparging flow rate.

The treatment temperature Ta according to the present invention is below boiling temperature Tb of the wort. In particular, it is preferably greater than 90°C, more preferably greater than 93°C, even more preferably greater than 96°C, and most preferably between (Tb-2°C) and Tb. As discussed above, the rate of several of the reactions required to happen during the pseudo-boiling process are temperature dependent, such as sterilization, termination of enzyme activity, conversion of SMM into DMS, and the like. There is therefore a trade-off temperature value to be found wherein treatment time t remains commercially reasonable and energy consumption is below today's levels. This trade off value of the treatment temperature Ta is comprised between (Tb-2°C) and the boiling temperature Tb of the wort. It is not excluded to heat the wort at the boiling temperature Tb after the treatment time t, but in the vast majority of cases it is not necessary, and the excess energy required to boil the wort, even for a short time, should be justified by some specific requirements of the treated wort. Preferably, the wort contained in the kettle (1) does not reach the boiling temperature Tb thereof during the whole treatment time of its residence in said kettle (1).

A gas sparger located at the bottom of the kettle generates a column of gas bubbles. The volatile components present in the wort are thus in equilibrium between gas and liquid phases without need for the wort to boil. As discussed above, the column of bubbles penetrating through the lumens of the hollow tubes of an internal boiler creates a forced convection independent of temperature, contrary to natural convection which is highly temperature dependent for the creation of sufficient vapour bubbles. On the other hand, gas bubbles act like vapour bubbles when surfacing, yielding the same effect as with the latter with respect to elimination of volatiles and coagulation of haze active proteins, but without having to boil and evaporate large amounts of wort. The gas flow is also advantageous because it homogenizes the wort by creating a gas lift system with a central ascending flow and a lateral descending flow.

After the pseudo-boiling step described before, either wort is transferred through the outlet (1d) of the kettle (1) and combined with wort from the holding tank (9), or wort from the holding tank (9) is transferred in the kettle (1) and combined with the treated wort contained in the kettle (1).

The combined wort can be fed to a whirlpool tun (6) or the like for separating trub from clear wort, and thence proceed to fermentation (700), maturation (800), filtering (900) and packaging (1000) of the thus produced beer or malt based beverage exactly in the same way as in the conventional brewing processes.

The wort treated by the process of the present invention shows lower amounts of 2-Furfural, DMS and Cocoa pyrazine compared to wort treated in accordance with a traditional pseudo-boiling process.

The present invention also relates to a beer or a malt based beverage produced from wort treated by the method as described before.

The beer obtained from wort treated by the process of the present invention shows a better foam stability compared to beer obtained from wort treated in accordance with a traditional pseudo-boiling process.

The present invention also relates to a beer or malt based beverage having one or more of the following properties:
(a) foam stability (NIBEM) of at least 150s;
(b) haze measured on fresh beer or malt based beverage lower than 1.0 EBC; and/or
(c) haze measured on beer or malt based beverage aged for 3 days at 60°C lower than 1.5 EBC.

### EXAMPLES

Two 6.0 hl brews were completed for this investigation, one control brew and one trial brew. The control brew was treated in accordance with a traditional pseudo-boiling process and is used as reference example (REX), whereas the trial brew was treated in accordance with the process of the present invention and is used as inventive example (EX). The two batches were separately treated in the same external boiler kettle (1), but the batch treated in accordance with a traditional pseudo-boiling process was not divided into two sub-streams prior to feeding the wort into the kettle.

### Reference example (REX)

Once the kettle had received all the wort coming from the mash filtration step, the sparging process was set up with carbon dioxide at a constant flow rate of 0.12 m3/h/hl. Wort was held at a temperature Ta = 98.3 °C, thereby maintaining the pseudo-boiling-like state during a treatment time t = 60 min. Treated wort was then held for the whirlpool stand prior to cooling.

### Inventive example (EX)

Once the kettle had received about 65% of the wort from the mash filtration step, the sparging process was set up with carbon dioxide at a constant flow rate of 0.12 m3/h/hl. Wort was held at a temperature Ta = 98.3 °C, thereby maintaining the pseudo-boiling-like state during a treatment time t = 60 min.

The second stream, which represented the last 35% of the wort from the mash filtration step, was diverted into a holding tank (9) and kept at temperature of 78.0 °C whilst waiting for the first stream to complete the boiling step.

The two streams were then mixed and held for the whirlpool stand prior to cooling.

The brew of the inventive example (EX) registered a total evaporation rate of 0.8 wt.%, whilst the brew of the reference example (REX) registered an evaporation rate of 1.2 wt.%. Thus, evaporation could be reduced by approx. 33%.

### Beer production

When comparing the inventive example (EX) with the reference example (REX), all other beer production parameters were kept constant throughout the entire production process. After cooling, aerated wort was pitched with equal amounts of yeast slurry and the temperature profiles were kept equal during fermentation (700). After filtration (900), the final beers were bottled (1000), and a portion thereof subjected to accelerated (either thermal or oxidative) aging, prior to analysis.

### Results

General quality parameters of the cold wort and of the beers produced from these worts are listed in Table 1 (cold wort) and in Table 2 (end product), respectively.

**Table 1 (cold wort)**

| | **REX** | **EX** |
|---|---|---|
| Sensitive protein (mg/L) | 5 | 6 |
| 2-Furfural (ppb) | 239 | 207 |
| DMS (ppb) | 55 | 53 |
| Cocoa pyrazine (ppb) | 0.1 | 0.0 |

**Table 2 (end product)**

| | **REX** | **EX** |
|---|---|---|
| Beer colour (EBC) | 4.7 | 4.7 |
| Foam stability (Nibem, S) | 221 | 230 |

## Claims

1. Method for treating wort in a kettle, said method comprising the steps of:
(a) providing:
- a kettle (1) provided with an inlet (1u) suitable for feeding wort into the kettle (1) and with an outlet (1d) suitable for flowing wort out of the kettle (1),
- heating means (2) suitable for bringing the wort contained in the kettle (1) close to or at boiling temperature as well as for controlling said temperature,
- a gas sparging system (3) suitable for sparging a gas into the wort contained in the kettle (1), and
- a holding tank (9);
(b) dividing a wort stream from a lautering step into two sub-streams, the first sub-stream being 50 to 75 % by volume and the second sub-stream being 50 to 25 % by volume relating to the total volume of the initial wort stream;
(c) feeding wort from the first sub-stream into the kettle (1) through the inlet (1u), said wort being at a temperature below its boiling temperature Tb;
(d) while sparging a gas through the wort contained in the kettle (1), heating said wort to and maintaining it at a treatment temperature Ta, which is below the boiling temperature Tb of the wort, for a treatment time t;
(e) feeding wort from the second sub-stream into the holding tank (9);
(f) transferring the treated wort through the outlet (1d) of the kettle (1) and combining it with wort from the holding tank (9), or transferring wort from the holding tank (9) in the kettle (1) and combining it with the treated wort contained in the kettle (1).

2. The method of claim 1, wherein step (a) further comprises providing a buffer tank (7), and wherein step (c) further comprises feeding wort from the first sub-stream into the buffer tank (7) and feeding wort from the buffer tank (7) into the kettle (1).

3. The method according to any of the preceding claims, wherein the treatment time t is comprised between 15 and 90 min, preferably between 20 and 75 min, more preferably between 30 and 60 min, and most preferably no longer than is required to evaporate at most 4 wt.% of water initially present in the wort.

4. The method according to any of the preceding claims, wherein the wort contained in the kettle (1) does not reach the boiling temperature Tb thereof during the whole treatment time of its residence in said kettle (1).

5. The method according to any of the preceding claims, wherein the treatment temperature Ta is greater than 90°C, preferably greater than 93°C, more preferably greater than 96°C, and most preferably between (Tb-2°C) and Tb.

6. The method according to any of the preceding claims, wherein the gas is sparged into the wort contained in the kettle (1) by means of a gas sparger (3) located at the bottom of said kettle (1) and oriented upwards, said sparger (3) preferably comprising a circular plate, cylinder or ring provided with a multitude of apertures.

7. The method according to claim 6, wherein the kettle (1) is of the internal boiler type, comprising vertically oriented heating tubes (2a) through which the wort to be heated or to be maintained at elevated temperature flows, said heating tubes (2a) being located above the gas sparger (3).

8. The method according to claim 6, wherein the kettle (1) is of the external boiler type, comprising heating tubes (2a) through which the wort to be heated or to be maintained at elevated temperature flows, said heating tubes (2a) being located outside the kettle (1) and in fluid communication therewith through tubing and a pump (8).

9. The method according to any of the preceding claims, wherein the gas sparging flow rate has an initial value, which is highest upon introduction of the wort in the kettle (1), comprised between 0.05 and 50 m³/h/hl wort, preferably between 0.1 and 10 m³/h/hl wort, and decreases progressively as the wort reaches its treatment temperature Ta to a value comprised between 25 and 75%, preferably between 35 and 50%, more preferably between 37 and 45%, of the initial value of the gas sparging flow rate.

10. The method according to any of the preceding claims, wherein the gas is an inert gas selected from nitrogen and carbon dioxide.

11. The method according to any of claims 1 to 9, wherein the gas is air.

12. The method according to any of the preceding claims, wherein the treated wort and wort from the second sub-stream are transferred to a whirlpool (6) and then to further treatment vessels to produce a beer or a malt based beverage.

13. System for treating wort comprising:
- means suitable for dividing a wort stream from a lautering step into two sub-streams, the first sub-stream being 50 to 75 % by volume and the second sub-stream being 50 to 25 % by volume relating to the total volume of the wort stream;
- a holding tank (9) configured to receive wort from the second sub-stream and to transfer wort into the kettle (1);
- a kettle (1) provided with an inlet (1u) configured to receive wort from the first sub-stream and with an outlet (1d) configured to flow wort out of the kettle (1) and combining it with wort from the holding tank (9);
- heating means (2) configured to bring the wort contained in the kettle (1) close to or at boiling temperature as well as to control said temperature;
- a gas sparging system (3) configured to sparge gas into the wort contained in the kettle (1); and
- optionally a buffer tank (7) configured to receive wort from the first sub-stream and to transfer wort into the kettle (1).

14. Beer or a malt based beverage produced from wort treated by the method according to any of claims 1 to 12.

15. Beer or malt based beverage having one or more of the following properties:
(a) foam stability (NIBEM) of at least 150s;
(b) haze measured on fresh beer or malt based beverage lower than 1.0 EBC; and/or
(c) haze measured on beer or malt based beverage aged for 3 days at 60°C lower than 1.5 EBC.
